# FASCICULE DE BREVET EUROPEEN

(11) **EP 1 986 966 B1**
(45) Date de publication et mention de la délivrance du brevet: **21.04.2010**
(21) Numéro de dépôt: 06709440.9
(22) Date de dépôt: 25.01.2006
(51) Int. Cl.: C03B 5/235

(54) **BRULEUR IMMERGE A FLAMME REGULEE**
TAUCHBRENNER MIT REGULIERTER FLAMME
IMMERSED BURNER WITH REGULATED FLAME

(30) Priorité: 26.01.2005 FR 0550224
(43) Date de publication de la demande: 05.11.2008
(73) Titulaire: SAINT-GOBAIN GLASS FRANCE, 92400 Courbevoie (FR); SAINT-GOBAIN ISOVER, 92400 Courbevoie (FR)
(72) Inventeur: PALMIERI, Biagio, F-COMPIEGNE 60200 (FR); LOPEPE, Frédéric, 33400 SALINAS (ES)
(74) Mandataire: Colombier, Christian
(86) Numéro de dépôt international: PCT/FR2006/050056
(87) Numéro de publication internationale: WO 2006/079748

(56) Documents cités:
- WO-A-03/045859
- DE-A1- 4 427 104
- US-A- 3 170 781
- DATABASE COMPENDEX [Online] ENGINEERING INFORMATION, INC., NEW YORK, NY, US; SHIROTSUKA T: "Flame stability of a submerged burner" XP002358046 Database accession no. EIX72070002989 & INT CHEM ENG APR 1971, vol. 11, no. 2, avril 1971 (1971-04), pages 332-8,

## Description

L'invention concerne un dispositif comprenant un brûleur, particulièrement adapté à la fusion des matières vitrifiables menant à un verre à base de silice, notamment en tant que brûleur immergé, c'est-à-dire dont la flamme est développée au sein des matières en fusion.

Les brûleurs immergés présente un certain nombre d'avantages pour fusionner le verre, notamment du fait qu'ils apportent l'énergie de fusion directement dans les matières à fusionner, ce qui les rend très efficaces (moins de pertes de calories) et d'autre part du fait qu'ils brassent vigoureusement les matières à transformer, ce qui accroît encore l'efficacité de la fusion. L'utilisation de brûleurs immergés pour la fusion du verre a notamment été décrite dans WO 9935099, WO9937591, WO 0046161, WO 03031357, WO 03045859.

En cours de fonctionnement, il peut cependant arriver que les matières en fusion ou en cours de transformation rentrent dans le brûleur, ce qui provoque leur extinction. Un tel incident perturbe considérablement le fonctionnement de tout le procédé de fusion et l'on cherche à l'éviter le plus possible. La demanderesse a découvert un moyen d'éviter ce genre d'incident. Selon l'invention, on dispose autour du brûleur des arrivées supplémentaires de gaz. Ces arrivées supplémentaires ne sont en elles même généralement pas des brûleurs, mais peuvent par contre contribuer à la combustion du brûleur, notamment lorsqu'une de ces arrivées supplémentaires apporte un gaz oxydant.

La demanderesse a découvert que la flamme d'un brûleur immergé pouvait être assimilée à une bulle qui se détache de temps en temps du brûleur, généralement avec une fréquence allant de 30 à 300 fois par minutes. Ce comportement a été découvert par mesure de la pression du fluide (comme un gaz) d'alimentation des brûleurs. Des à-coups sont en effet observées, lesdits a-coups ayant une fréquence assez régulière. Sans être lié par la théorie qui suit, les matières vitrifiables pourraient avoir tendance à rentrer dans le brûleur juste après que la bulle se détache du brûleur. Selon l'invention, au moins une arrivée de gaz à proximité du brûleur favorise la régularité du détachement des bulles et réduit considérablement la fréquence des rentrées de matières vitrifiables dans le brûleur. Cette arrivée de gaz semble jouer un rôle de régulateur du détachement des bulles.

Le brûleur est alimenté par un comburant et un combustible réagissant ensemble pour créer une flamme. Le comburant peut comprendre de l'oxygène et être notamment de l'oxygène pur, de l'air ou de l'air enrichi en oxygène. Le carburant peut notamment être du gaz naturel, du méthane, du butane, du propane. Le comburant et le combustible arrivent généralement de façon concentrique dans le brûleur et sont généralement mélangés dans une chambre placée juste avant la sortie du brûleur.

L'alimentation du brûleur en fuel liquide est possible.

L'invention concerne un procédé et un dispositif de fusion de matières vitrifiables par au moins un brûleur immergé générant une flamme au sein desdites matières vitrifiables, au moins une arrivée de gaz séparée du brûleur étant suffisamment proche dudit brûleur pour interagir avec ladite flamme. L'arrivée de gaz supplémentaire par rapport au brûleur peut avoir sensiblement la même direction que celle du brûleur, c'est-à-dire que le gaz de cette arrivée supplémentaire peut avoir une direction parallèle à celle du comburant et du carburant alimentant le brûleur. Cependant, de préférence, le gaz de cette arrivée supplémentaire est dirigé vers le gaz sortant du brûleur. La distance entre d'une part le point d'intersection entre l'axe de l'arrivée de gaz séparée et l'axe du brûleur et d'autre part l'orifice de sortie du brûleur, peut par exemple aller de 0 à l'infini (débits parallèles) et va de préférence de 0 à 15 cm. La distance à laquelle l'arrivée de gaz séparée doit être du brûleur dépend des circonstances, des débits, températures, etc, de sorte qu'il est difficile de donner l'équation exacte donnant cette distance. L'essentiel est que l'arrivée de gaz doit être suffisamment proche du brûleur pour interagir avec la flamme du brûleur, c'est-à-dire influer sur sa forme ou sur le flux de liquide à proximité immédiate de la flamme, de façon à favoriser le détachement de la flamme en tant que bulle, du brûleur. Généralement, l'arrivée séparée de gaz peut être à moins de 50 cm du brûleur.

Le gaz alimentant l'arrivée séparée peut comprendre de l'oxygène ou de l'azote ou de l'air. Il peut participer à la combustion du brûleur, notamment s'il comprend un gaz oxydant comme l'oxygène. Dans ce cas, il est une source supplémentaire de comburant.

Généralement, le débit volumique de gaz arrivant séparément, par une ou plusieurs arrivées séparées, représente au total (somme des débits de toutes les arrivées séparées) 2 à 20% et de préférence 5 à 10% de la somme des débits volumiques normaux (volume normal: ramené à des conditions normales de température et de pression) de comburant gazeux et de carburant gazeux alimentant le brûleur (cas ou les fluides d'alimentation du brûleur sont gazeux). Généralement, la somme des débits volumiques normaux de comburant gazeux et de carburant gazeux va de 0,5 Nm³/h à 150 Nm³/h.

De préférence pour chaque brûleur, on prévoit au moins deux arrivées de gaz séparées pour influer sur le lâcher de bulle de la flamme du brûleur. De manière encore préférée, pour chaque brûleur, on prévoit au moins deux arrivées de gaz séparées pour influer sur le lâcher de bulle de la flamme du brûleur. L'utilisation de quatre voir cinq (voire même plus) arrivées séparées par brûleur est également possible.

L'invention concerne également un procédé de fusion de matières vitrifiables par au moins un brûleur immergé dont la flamme a un comportement de bulle se détachant du brûleur, les détachements de ladite bulle pouvant être détectés par une mesure de pression du comburant et/ou combustible (détection d'à-coups), au moins une arrivée de gaz séparée du brûleur améliorant la régularité desdits détachement. La fréquence des détachements va généralement de 30 à 300 fois par minute.

L'invention concerne également un four de fusion de matières vitrifiables comprenant un dispositif comprenant un brûleur et au moins une buse d'arrivée de gaz à moins de 50 cm dudit brûleur, le brûleur étant immergé dans les matières vitrifiables en cours de fusion ou transformation, notamment pour la préparation de verre à base de silice (c'est-à-dire comprenant généralement au moins 30% en poids de silice). Le dispositif comprend de préférence au moins deux buses d'arrivée de gaz à moins de 50 cm dudit brûleur, et de manière encore préférée au moins trois buses d'arrivée de gaz à moins de 50 cm dudit brûleur.
La figure 1 représente vu de dessus un dispositif comprenant un brûleur et trois arrivées de gaz séparées.
La figure 2 représente un four selon l'invention vu de côté.

On n'a pas représenté sur les figures les arrivées de combustible et de comburant alimentant les brûleurs.

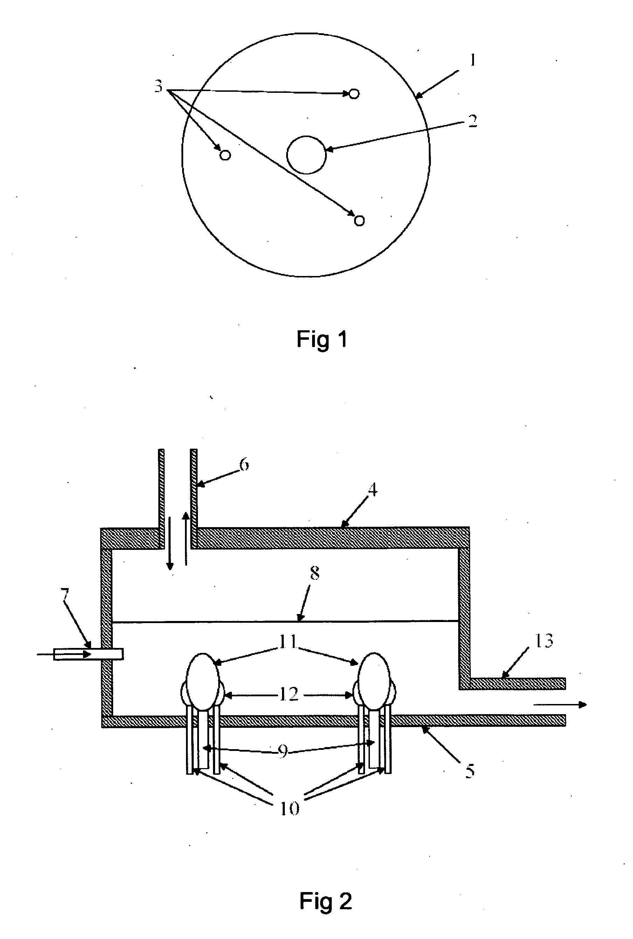

On a représenté sur la figure 1 un dispositif selon l'invention vu de dessus comprenant un support 1 en une matière réfractaire (béton réfractaire, pierre réfractaire, molybdène, ou toute matière résistant au verre fondu), un brûleur 2 au centre, entouré de trois arrivées de gaz séparées. Ce dispositif peut être placé au niveau d'une sole de four, le brûleur développant une flamme à l'intérieur des matières en fusion.

On a représenté sur la figure 2 un four vu de côté. Ce four comprend des parois en matière réfractaire, une voûte 4 et une sole 5. Une ouverture 6 à travers la voûte peut servir à l'introduction de matières vitrifiables (silice, fondant de la silice, fluidifiant, etc) et/ou à l'évacuation des fumées. Une ouverture 7 débouchant sous le niveau 8 des matières fondues peut également être utilisée pour l'introduction de matières vitrifiable. Les matières fondues sortent du four par la gorge 13. Ce four est équipé de deux brûleurs immergés 9 développant chacun une flamme 11 au sein des matières en fusion, sous le niveau 8. Autour de chaque brûleur se trouvent deux arrivées séparées de gaz 10, suffisamment près des brûleurs pour réguler le « lâcher de bulle » du brûleur.

## Revendications

1. Procédé de fusion de matières vitrifiables par au moins un brûleur immergé (9) générant une flamme (11) au sein desdites matières vitrifiables fondues, **caractérisé en ce qu'**au moins une arrivée de gaz (10) séparée du brûleur est suffisamment proche dudit brûleur (9) pour interagir avec ladite flamme (11).

2. Procédé selon la revendication précédente, **caractérisé en ce que** la distance entre d'une part le point d'intersection entre l'axe de l'arrivée de gaz séparée (10) et l'axe du brûleur (9) et d'autre part l'orifice de sortie du brûleur (9); va de 0 à 15 cm.

3. Procédé selon la revendication précédente, **caractérisé en ce que** le brûleur (9) est alimenté par un comburant et un combustible réagissant ensemble pour créer la flamme.

4. Procédé selon l'une des revendications précédentes, **caractérisé en ce que** le gaz comprend de l'oxygène ou de l'azote ou de l'air.

5. Procédé selon l'une des revendications précédentes **caractérisé en ce que** le gaz participe à la combustion du brûleur (9).

6. Procédé selon l'une des revendications précédentes **caractérisé en ce que** le débit volumique de gaz arrivant séparément représente 2 à 20% de la somme des débits volumiques normaux de comburant gazeux et de carburant gazeux alimentant le brûleur (9).

7. Procédé selon la revendication précédente, **caractérisé en ce que** le débit de gaz arrivant séparément représente 5 à 10% de la somme des débits volumiques normaux de comburant gazeux et de carburant gazeux alimentant le brûleur (9).

8. Procédé selon l'une des revendications précédentes **caractérisé en ce que** la somme des débits volumiques normaux de comburant gazeux et de carburant gazeux va de 0,5 Nm³/h à 150 Nm³/h.

9. Procédé selon l'une des revendications précédentes **caractérisé en ce qu'**il comprend au moins deux arrivées de gaz (10).

10. Procédé selon la revendication précédente, **caractérisé en ce qu'**il comprend au moins trois arrivées de gaz (10).

11. Procédé selon l'une des revendications précédentes, **caractérisé en ce que** la flamme (11) a un comportement de bulle se détachant du brûleur (9) dont les détachement peuvent être détectés par une mesure de pression du comburant et/ou combustible, au moins une arrivée de gaz (10) séparée du brûleur améliorant la régularité desdits détachement.

12. Procédé selon la revendication précédente, **caractérisé en ce que** la fréquence des détachements va de 30 à 300 fois par minute.

13. Four de fusion de matières vitrifiables comprenant un brûleur immergé (9) dans les matières vitrifiables, **caractérisé en ce qu'**il comprend un dispositif comprenant le brûleur (9) et au moins une buse d'arrivée de gaz (10) à moins de 50 cm dudit brûleur.

14. Four selon la revendication précédente, **caractérisé en ce que** le dispositif comprend au moins deux buses d'arrivée de gaz (10) à moins de 50 cm dudit brûleur.

15. Four selon la revendication précédente, **caractérisé en ce que** le dispositif comprend au moins trois buses d'arrivée de gaz (10) à moins de 50 cm dudit brûleur.

16. Application du procédé ou four de l'une des revendications précédentes à la fusion de verre.

## Claims

1. A method of melting glass batch materials by at least one submerged burner (9) generating a flame (11) within said molten batch materials, **characterized in that** at least one gas inlet (10) separate from the burner is close enough to said burner (9) to interact with said flame (11).

2. The method as claimed in the preceding claim, **characterized in that** the distance between, on the one hand, the point of intersection between the axis of the separate gas inlet (10) and the axis of the burner (9) and, on the other hand, the outlet orifice of the burner (9) ranges from 0 to 15 cm.

3. The method as claimed in the preceding claim, **characterized in that** the burner (9) is fed with an oxidizer and a fuel that react together to create the flame.

4. The method as claimed in one of the preceding claims, **characterized in that** the gas comprises oxygen or nitrogen or air.

5. The method as claimed in one of the preceding claims, **characterized in that** the gas participates in the combustion of the burner (9).

6. The method as claimed in one of the preceding claims, **characterized in that** the volume flow rate of separately incoming gas represents 2 to 20% of the sum of the standard volume flow rates of gaseous oxidizer and gaseous fuel feeding the burner (9).

7. The method as claimed in the preceding claim, **characterized in that** the flow rate of separately incoming gas represents 5 to 10% of the sum of the standard volume flow rates of gaseous oxidizer and gaseous fuel feeding the burner (9).

8. The method as claimed in one of the preceding claims, **characterized in that** the sum of the standard volume flow rates of gaseous oxidizer and gaseous fuel ranges from 0.5 Sm³/h to 150 Sm³/h.

9. The method as claimed in one of the preceding claims, **characterized in that** it comprises at least two gas inlets (10).

10. The method as claimed in the preceding claim, **characterized in that** it comprises at least three gas inlets (10).

11. The method as claimed in one of the preceding claims, **characterized in that** the flame (11) has the behavior of a bubble detaching from the burner (9), the detachments of which may be detected by measuring the pressure of the oxidizer and/or fuel, at least one gas inlet (10) separate from the burner improving the regularity of said detachments.

12. The method as claimed in the preceding claim, **characterized in that** the detachment frequency ranges from 30 to 300 times per minute.

13. A glass batch melting furnace comprising a burner (9) submerged in the glass batch, **characterized in that** it comprises a device comprising the burner (9) and at least one gas inlet nozzle (10) less than 50 cm from said burner.

14. The furnace according to preceding claim **characterized in that** the device comprises at least two gas inlet nozzles (10) less than 50 cm from said burner.

15. The furnace according to preceding claim **characterized in that** the device comprises at least three gas inlet nozzles (10) less than 50 cm from said burner.

16. The application of the method or furnace of one of the preceding claims to the melting of glass.

## Patentansprüche

1. Verfahren zum Schmelzen von Glasrohstoffen durch mindestens einen Tauchbrenner (9), der eine Flamme (11) in den geschmolzenen Glasrohstoffen erzeugt, **dadurch gekennzeichnet, dass** mindestens eine von dem Brenner getrennte Gaszuleitung (10) sich ausreichend nah an diesem Brenner (9) befindet, um mit der Flamme (11) zu wechselwirken.

2. Verfahren nach dem vorhergehenden Anspruch, **dadurch gekennzeichnet, dass** der Abstand zwischen einerseits dem Schnittpunkt der Achse der getrennten Gaszuleitung (10) mit der Achse des Brenners (9) und andererseits der Ausgangsöffnung des Brenners (9) 0 bis 15 cm beträgt.

3. Verfahren nach dem vorhergehenden Anspruch, **dadurch gekennzeichnet, dass** der Brenner (9) mit einem Verbrennungsmittel und einem Brennstoff gespeist wird, die miteinander reagieren, um die Flamme zu erzeugen.

4. Verfahren nach einem der vorhergehenden Ansprüche, **dadurch gekennzeichnet, dass** das Gas Sauerstoff, Stickstoff oder Luft umfasst.

5. Verfahren nach einem der vorhergehenden Ansprüche, **dadurch gekennzeichnet, dass** das Gas an dem Verbrennungsvorgang des Brenners (9) teilnimmt.

6. Verfahren nach einem der vorhergehenden Ansprüche, **dadurch gekennzeichnet, dass** der Volumendurchfluss des getrennt ankommenden Gases 2 bis 20 % der Summe aus den Normvolumendurchflüssen von gasförmigem Verbrennungsmittel und gasförmigem Brennstoff, die den Brenner (9) speisen, ausmacht.

7. Verfahren nach dem vorhergehenden Anspruch, **dadurch gekennzeichnet, dass** der Durchfluss des getrennt ankommenden Gases 5 bis 10 % der Summe aus den Normvolumendurchflüssen von gasförmigem Verbrennungsmittel und gasförmigem Brennstoff, die den Brenner (9) speisen, ausmacht.

8. Verfahren nach einem der vorhergehenden Ansprüche, **dadurch gekennzeichnet, dass** die Summe der Normvolumendurchflüsse von gasförmigem Verbrennungsmittel und gasförmigem Brennstoff 0,5 bis 150 Nm³/h beträgt.

9. Verfahren nach einem der vorhergehenden Ansprüche, **dadurch gekennzeichnet, dass** es mindestens zwei Gaszuleitungen (10) umfasst.

10. Verfahren nach dem vorhergehenden Anspruch, **dadurch gekennzeichnet, dass** es mindestens drei Gaszuleitungen (10) umfasst.

11. Verfahren nach einem der vorhergehenden Ansprüche, **dadurch gekennzeichnet, dass** die Flamme (11) das Verhalten von Blasen besitzt, die sich von dem Brenner (9) ablösen, wobei die Ablösevorgänge durch eine Messung des Drucks von Verbrennungsmittel und/oder Brennstoff nachgewiesen werden können und die Regelmäßigkeit dieser Ablösevorgänge von mindestens einer von dem Brenner getrennten Gaszuleitung (10) verbessert wird.

12. Verfahren nach dem vorhergehenden Anspruch, **dadurch gekennzeichnet, dass** die Häufigkeit der Ablösevorgänge 30 bis 300 Mal pro Minute beträgt.

13. Schmelzofen für Glasrohstoffe, der einen in die Glasrohstoffe eingetauchten Brenner (9) umfasst, **dadurch gekennzeichnet, dass** er eine Vorrichtung umfasst, die den Brenner (9) und mindestens eine Gaszufuhrdüse (10) in einem Abstand von weniger als 50 cm von diesem Brenner umfasst.

14. Ofen nach dem vorhergehenden Anspruch, **dadurch gekennzeichnet, dass** die Vorrichtung mindestens zwei Gaszufuhrdüsen (10) in einem Abstand von weniger als 50 cm von dem Brenner umfasst.

15. Ofen nach dem vorhergehenden Anspruch, **dadurch gekennzeichnet, dass** die Vorrichtung mindestens drei Gaszufuhrdüsen (10) in einem Abstand von weniger als 50 cm von dem Brenner umfasst.

16. Anwendung des Verfahrens oder Verwendung des Ofens nach einem der vorhergehenden Ansprüche für das Erschmelzen von Glas.
